# FASCICULE DE BREVET EUROPEEN

(11) **EP 2 800 927 B1**
(45) Date de publication et mention de la délivrance du brevet: **13.09.2017**
(21) Numéro de dépôt: 12816728.5
(22) Date de dépôt: 19.12.2012
(51) Int. Cl.: F21S 8/10, G02B 6/00

(54) **GUIDE DE LUMIÈRE ET VÉHICULE AVEC UN TEL GUIDE DE LUMIÈRE**
LICHTLEITER UND KFZ MIT SOLCH EINEM LICHTLEITER
LIGHT GUIDE AND VEHICLE WITH SUCH A LIGHT GUIDE

(30) Priorité: 04.01.2012 FR 1250094
(43) Date de publication de la demande: 12.11.2014
(73) Titulaire: PSA Automobiles SA, 78300 Poissy (FR)
(72) Inventeur: GONCALVES, Whilk Marcelino, F-75013 Paris (FR); LE DALL, Christophe, F-92150 Suresnes (FR)
(86) Numéro de dépôt international: PCT/FR2012/052990
(87) Numéro de publication internationale: WO 2013/102719

(56) Documents cités:
- EP-A1- 0 544 332
- EP-A1- 1 158 322
- EP-A1- 1 860 374
- WO-A1-2010/049857
- US-A- 4 765 701
- US-A- 5 506 924
- US-A- 5 771 326
- US-A- 5 799 124
- US-A1- 2005 265 684
- US-A1- 2009 040 789

## Description

L'invention concerne certains dispositifs de protection, et plus précisément ceux qui comportent une paroi transparente, éventuellement en verre ou en matériau synthétique, et éventuellement teintée.

Comme le sait l'homme de l'art, la paroi transparente de certains dispositifs de protection peut être utilisée en tant que support pour des moyens d'éclairage qui assurent au moins une fonction d'éclairage, éventuellement de signalisation, et devant éventuellement satisfaire à des normes photométriques particulières. C'est par exemple le cas de certaines parois transparentes qui constituent des lunettes arrières de véhicule automobile et servent de support pour des moyens d'éclairage (éventuellement de signalisation) qui assurent une fonction de signalisation, par exemple de type feu central de stop (ou troisième feu de stop - en anglais CHMSL (pour « Center High Mounted Stop Light »)). Dans ce dernier cas, les moyens d'éclairage sont généralement placés dans la partie centrale supérieure de la lunette arrière et comprennent, d'une part, une source de lumière (lampe(s) halogène(s) ou diodes électroluminescentes (ou LEDs)), et, d'autre part, au moins un réflecteur ou un guide de lumière.

En raison de leur lieu d'implantation ces moyens d'éclairage obstruent une partie de la lunette arrière, ce qui réduit le champ d'observation de chaque personne située du côté intérieur de la paroi transparente (et donc dans l'habitacle du véhicule), et notamment du conducteur lorsque cette dernière est une lunette arrière de véhicule. On comprendra que plus les moyens d'éclairage sont encombrants, par exemple du fait d'un effet de style recherché, plus ils réduisent le champ d'observation.

Afin de remédier à cet inconvénient, il a été proposé d'utiliser une partie interne de la paroi transparente comme guide de lumière et de définir dans une partie choisie de cette dernière une zone destinée à transférer la lumière vers l'extérieur. Plus précisément, une source de lumière est chargée de délivrer de la lumière au niveau d'un bord (par exemple supérieur ou inférieur) de la paroi transparente, et cette lumière se propage à l'intérieur de cette dernière entre ses faces intérieure et extérieure du fait de réflexions totales, jusqu'à ce qu'elle parvienne au niveau d'une zone qui est agencée de manière à la transférer vers l'extérieur, via la face extérieure. Des dispositifs de protection de ce type sont notamment décrits dans les documents brevet DE 10214505, FR 2955539 et EP 0299001.

La zone de transfert de lumière est généralement constituée par au moins un renfoncement interne présentant en section une forme générale rectangulaire et définissant un prisme. L'inclinaison de la face principale du prisme est choisie de manière à réfléchir la lumière incidente vers l'extérieur suivant une direction générale choisie (éventuellement sensiblement perpendiculaire à la face extérieure de la paroi transparente, lorsque cette dernière est sensiblement verticale). Chaque prisme (ou renfoncement interne) peut être défini lors du moulage (ou de la fabrication par gravité) de la paroi transparente, ou bien par usinage. Hélas, la génération de ce type de prisme de façon reproductible et à grande échelle s'avère, dans la pratique, quasiment irréalisable par moulage (ou par gravité) lorsque le matériau utilisé pour fabriquer la paroi transparente présente une viscosité importante. En effet, la viscosité du matériau empêche ce dernier de venir épouser étroitement les angles qui sont définis par les portions du moule qui constituent chaque prisme en négatif, et donc le prisme en positif ainsi défini sur la face intérieure de la paroi transparente ne remplit pas correctement sa fonction photométrique. Quant à la technique d'usinage, elle offre de bons résultats mais s'avère très onéreuse.

L'invention a donc pour but de proposer une solution alternative qui ne présente pas tout ou partie des inconvénients précités.

Elle propose plus précisément à cet effet un dispositif de protection avec les caractéristiques de la revendication 1. Grâce à la zone centrale angulaire définie par une première portion arrondie on supprime un angle de prisme qui ne pourrait pas être comblé intégralement par le matériau à l'état visqueux utilisé (lors du moulage ou de la fabrication par gravité), ce qui permet de garantir que le prisme RI va assurer la fonction d'éclairage choisie.

Le dispositif de protection selon l'invention peut comporter d'autres caractéristiques qui peuvent être prises séparément ou en combinaison, et notamment :
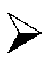 chaque seconde portion arrondie peut présenter un rayon de courbure constant ou variable (ou évolutif) spatialement ;
   - chaque première portion arrondie peut présenter un rayon de courbure constant ou variable (ou évolutif) spatialement ;
   - chaque rayon de courbure peut être compris entre environ 0,1 mm et environ 0,5 mm ;
   - sa source de lumière peut être propre à délivrer de la lumière au niveau d'un bord inférieur ou supérieur ou encore latéral de sa paroi transparente ;
   - sa paroi transparente peut être réalisée en verre ou en matériau synthétique ;
   - sa paroi transparente peut constituer une lunette arrière de véhicule, éventuellement de type automobile ;
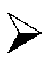 la fonction d'éclairage choisie peut être une fonction de signalisation de type feu central de stop.

D'autres caractéristiques et avantages de l'invention apparaîtront à l'examen de la description détaillée ci-après, et des dessins annexés, sur lesquels :
- la figure 1 illustre schématiquement, dans une vue en perspective (du côté de la face intérieure), un exemple de réalisation d'un dispositif de protection selon l'invention,
- la figure 2 illustre schématiquement, dans une vue en coupe suivant l'axe II-II de la figure 1, une partie supérieure du dispositif de protection de la figure 1,
- la figure 3 illustre schématiquement un gros plan de la zone de transfert de la paroi transparente du dispositif de protection de la figure 2, et
- figure 4 illustre schématiquement, dans une vue en coupe suivant l'axe IV-IV de la figure 1, une partie de la zone de transfert de la paroi transparente du dispositif de protection de la figure 2.

Les dessins annexés pourront non seulement servir à compléter l'invention, mais aussi contribuer à sa définition, le cas échéant.

L'invention a pour but d'offrir un dispositif de protection D destiné à assurer au moins une fonction d'éclairage (éventuellement de signalisation), satisfaisant éventuellement à des normes photométriques particulières, et pouvant éventuellement permettre des effets de style lumineux.

Dans ce qui suit, on considère, à titre d'exemple non limitatif, que le dispositif de protection D est destiné à équiper un véhicule, éventuellement de type automobile. Mais l'invention n'est pas limitée à cette application. Un dispositif de protection D, selon l'invention, peut en effet équiper tout type de système, équipement, appareil ou dispositif, y compris des murs, vitrines ou cloisons de bâtiment.

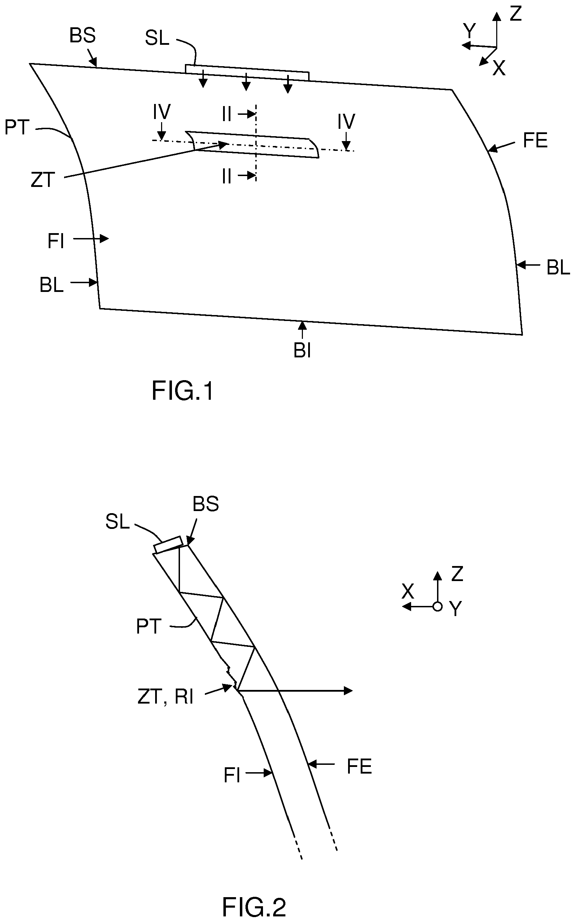

Sur les différentes figures 1 à 4 la direction X est la direction longitudinale du véhicule, laquelle est sensiblement parallèle aux côtés latéraux, la direction Y est la direction transversale du véhicule, laquelle est sensiblement perpendiculaire aux côtés latéraux, et la direction Z est la direction verticale du véhicule, laquelle est sensiblement perpendiculaire aux directions longitudinale X et transversale Y.

On se réfère tout d'abord aux figures 1 et 2 pour présenter un exemple de réalisation d'un dispositif de protection D selon l'invention.

Comme illustré, un dispositif de protection D, selon l'invention, comprend une paroi transparente PT et une source de lumière SL.

On considère dans ce qui suit, à titre d'exemple non limitatif, que la paroi transparente PT est une lunette arrière de véhicule automobile. Mais l'invention n'est pas limitée à ce type de paroi transparente. II pourrait en effet s'agir d'une vitre de fenêtre ou de baie vitrée ou d'une vitrine ou encore d'une partie d'un meuble.

Cette paroi transparente PT est par exemple réalisée en verre ou en matériau synthétique, par exemple par moulage ou par gravité.

Par ailleurs, cette paroi transparente PT comprend des bords inférieur BI et supérieur BS opposés l'un à l'autre et des bords latéraux BL.

La source de lumière SL est chargée de générer de la lumière et de délivrer cette lumière au niveau d'un bord BS de la paroi transparente PT, afin qu'elle se propage intérieurement entre les faces intérieure FI et extérieure FE par réflexion totale, comme illustré sur la figure 2.

Dans l'exemple non limitatif illustré sur la figure 1, la source de lumière SL délivre de la lumière au niveau du bord supérieur BS de la paroi transparente PT. Mais dans une variante de réalisation non représentée, la source de lumière SL pourrait délivrer de la lumière au niveau du bord inférieur BI ou d'un bord latéral BL de la paroi transparente PT (ce qui nécessiterait de modifier l'orientation des renfoncements internes RI décrits plus loin).

Cette source de lumière SL peut, par exemple, comprendre au moins une diode électroluminescente (ou LED), et de préférence plusieurs, faisant partie d'un circuit électronique. Mais dans une variante de réalisation, la source de lumière SL pourrait comprendre au moins une lampe (ou ampoule) ou un guide de lumière.

Chaque diode électroluminescente SL peut être agencée de manière à émettre une lumière blanche ou bien une lumière colorée, par exemple rouge dans le cas d'une fonction de signalisation de type feu de stop. On notera que dans certaines applications on peut utiliser des diodes électroluminescentes agencées de manière à émettre des lumières de couleurs différentes.

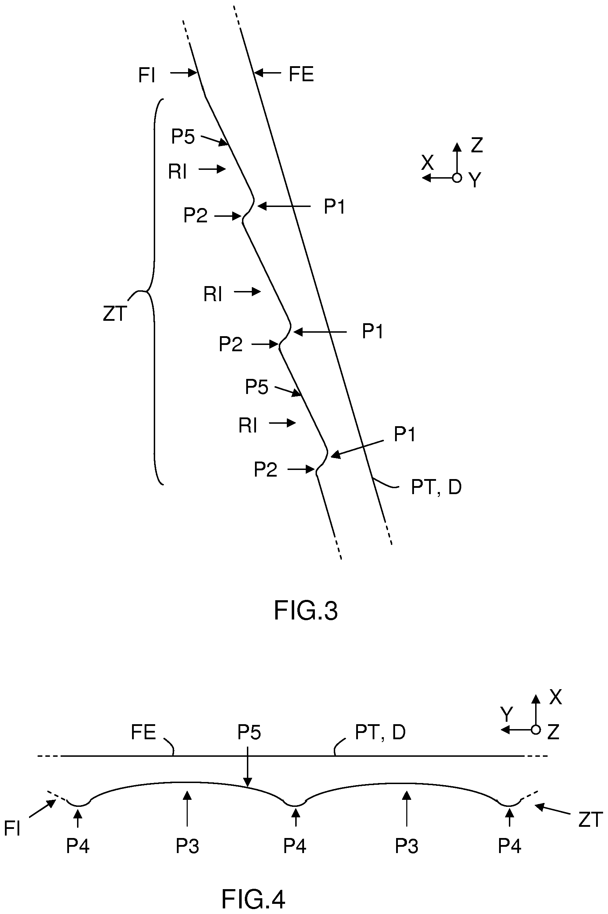

Selon l'invention, la face intérieure FI de la paroi transparente PT comporte au moins un renfoncement interne RI qui constitue un prisme ayant au moins une zone centrale angulaire définie par une première portion arrondie P1 (voir figure 3), chaque prisme RI étant propre à transférer vers l'extérieur, via la face extérieure FE, une partie au moins de la lumière qui se propage à l'intérieur de la paroi transparente PT pour assurer une fonction d'éclairage choisie.

On entend ici par « zone centrale angulaire » la portion d'un prisme qui précède une autre portion inclinée P5 ayant une pente dite principale.

Il est important de noter que la première portion arrondie P1 est ici concave, mais dans une variante de réalisation elle pourrait être convexe.

La génération d'une telle zone centrale angulaire définie par une première portion arrondie P1 est destinée à éviter la définition d'un angle de prisme qui ne pourrait être comblé intégralement par le verre à l'état visqueux lors du moulage ou de la fabrication par gravité, et donc garantie que le prisme RI va assurer la fonction d'éclairage choisie.

On notera que dans le cas d'une lunette arrière la fonction d'éclairage (ou optique) choisie est une fonction de signalisation de type feu central de stop (ou CHMSL). Mais d'autres fonctions d'éclairage plus ou moins complexes peuvent être envisagées selon les applications pour lesquelles le dispositif de protection D est employé.

Dans l'exemple non limitatif illustré sur les figures 2 et 3, la face intérieure FI de la paroi transparente PT comporte trois renfoncements internes RI successifs. Mais elle pourrait n'en comporter que deux ou encore plus de trois. La zone ZT qui comporte le(s) renfoncement(s) interne(s) RI est appelée ci-après zone de transfert. Une zone de transfert ZT est une zone dans laquelle la lumière est renvoyée par un prisme RI dans au moins une direction générale choisie, par exemple par réflexion, réfraction ou diffusion.

On notera que l'utilisation de plusieurs renfoncements internes RI successifs permet d'éviter d'avoir à pénétrer trop profondément dans l'épaisseur (suivant X) de la paroi transparente PT. Il est en effet impossible dans certaines applications dans lesquelles l'épaisseur de la paroi transparente PT est réduite (comme par exemple dans le cas d'une lunette arrière) de définir un renfoncement interne RI supérieur à environ un cinquième de cette épaisseur (cela dépend en fait, notamment, du type du verre ou du matériau synthétique utilisé, du traitement utilisé et du rayon de courbure local de la paroi transparente PT). Par exemple, dans le cas d'une paroi transparente PT en verre et présentant une épaisseur égale à environ 3 mm, on ne peut pas définir des renfoncements internes RI supérieurs à environ 0,5 mm. Si l'on devait utiliser un unique prisme ayant une pente principale d'environ 5° et une hauteur d'environ 15 mm, ce prisme devrait pénétrer d'environ 1,5 mm dans la paroi transparente PT, ce qui est impossible, alors qu'en utilisant trois prismes RI ayant chacun une pente principale d'environ 5° et une hauteur d'environ 5 mm, chaque prisme RI ne pénètre que d'environ 0,5 mm dans la paroi transparente PT, ce qui est tout à fait acceptable.

De préférence, et dans le cas d'une lunette arrière, la profondeur d'un renfoncement interne RI est comprise entre environ 0,3 mm et environ 0,6 mm (mais d'autres valeurs peuvent être envisagées, notamment du fait du type du verre ou du matériau synthétique utilisé, du traitement utilisé et du rayon de courbure local de la paroi transparente PT), et l'inclinaison d'une portion inclinée à pente principale P5 est comprise entre environ 3° et environ 8°.

On notera également qu'au moins un renfoncement interne (ou prisme) RI comprend une zone d'extrémité angulaire définie par une seconde portion arrondie convexe P2 qui prolonge la première portion arrondie P1 (ici en amont de cette dernière (P1)). Dans l'exemple non limitatif illustré sur les figures 2 et 3 chaque seconde portion arrondie convexe P2 assure la liaison entre deux prismes RI successifs et donc relie la partie terminale de la portion inclinée P5 d'un prisme RI à la première portion arrondie P1 du prisme RI suivant.

La génération d'une seconde portion arrondie convexe P2 est destinée à éviter la définition d'un autre angle de prisme qui ne pourrait être comblé intégralement par le verre à l'état visqueux lors du moulage ou de la fabrication par gravité, et donc permet de garantir encore plus que ce prisme RI va assurer la fonction d'éclairage choisie.

On notera que chaque seconde portion arrondie convexe P2 peut présenter un rayon de courbure qui est soit constant, soit variable (ou évolutif) spatialement. De même, chaque première portion arrondie P1 peut présenter un rayon de courbure qui est soit constant, soit variable (ou évolutif) spatialement.

On notera également que chaque rayon de courbure d'une première portion arrondie P1 ou d'une seconde portion arrondie convexe P2 peut être compris entre environ 0,1 mm et environ 0,5 mm. A titre d'exemple non limitatif, le rayon de courbure d'une première portion arrondie P1 est égal à 0,3 mm et le rayon de courbure d'une seconde portion arrondie convexe P2 est égal à 0,15 mm.

On notera également, comme illustré non limitativement sur la figure 4, que les renforcements internes RI sont constitués par au moins deux portions de cylindre (ou stries) P3 voisines, au niveau de la portion deux portions de cylindre (ou stries) P3 voisines, au niveau de la portion inclinée P5. Ces portions de cylindre (ou stries) P3 sont destinées à dévier les rayons lumineux angulairement.

On notera également qu'en choisissant judicieusement les rayons de ces stries P3, on peut créer une tâche lumineuse qui satisfait à une éventuelle réglementation et/ou offre l'aspect lumineux éclairé de la fonction d'éclairage (éventuellement de signalisation).

Dans l'exemple non limitatif illustré sur la figure 4 les portions de cylindre (ou stries) P3 sont concaves. Mais elles pourraient être convexes, ou bien concaves pour certaines et convexes pour d'autres. Par ailleurs, dans cet exemple non limitatif les portions de cylindre P3 sont sensiblement verticales (suivant Z), mais elles pourraient être sensiblement horizontales (suivant Y).

De plus, dans cet exemple non limitatif illustré sur la figure 4 les portions de cylindre P3 sont reliées entre elles par une portion arrondie convexe de liaison P4. Mais on pourrait se passer d'une telle portion arrondie convexe de liaison P4 ou bien utiliser une portion de liaison sensiblement plane. Par ailleurs, au lieu d'utiliser une portion de liaison convexe, on pourrait utiliser une portion de liaison concave (notamment lorsque les portions de cylindre P3 à relier sont convexes.

La génération d'une portion de liaison arrondie P4 est destinée à éviter la définition d'un angle sur la portion inclinée P5 d'un prisme RI qui ne pourrait être comblé intégralement par le verre à l'état visqueux lors du moulage ou de la fabrication par gravité.

Dans le cas d'une lunette arrière, chaque rayon de courbure d'une portion cylindrique P3, « suivant la direction longitudinale X », peut être, par exemple, compris entre environ 8 mm et environ 15 mm, la profondeur (ou épaisseur) d'une portion cylindrique P3, suivant la direction longitudinale X, peut être, par exemple, comprise entre environ 0,2 mm et environ 0,4 mm, chaque portion cylindrique P3 peut, par exemple, s'étendre suivant la direction transversale Y sur une longueur comprise entre environ 3 mm et environ 8 mm, chaque rayon de courbure d'une éventuelle portion de liaison P5, « suivant la direction longitudinale X », peut être, par exemple, compris entre environ 0,2 mm et environ 5 mm, et chaque portion de liaison P4 peut, par exemple, s'étendre suivant la direction transversale Y sur une longueur comprise entre environ 0,5 mm et environ 2 mm.

L'invention ne se limite pas aux modes de réalisation de dispositif de protection et de véhicule décrits ci-avant, seulement à titre d'exemple, mais elle englobe toutes les variantes que pourra envisager l'homme de l'art dans le cadre des revendications ci-après.

## Revendications

1. Dispositif de protection (D) comprenant une paroi transparente (PT) munie d'une face intérieure (FI) et d'une face extérieure (FE), et une source de lumière (SL) propre à délivrer de la lumière au niveau d'un bord (BS) de ladite paroi transparente (PT) afin qu'elle se propage intérieurement entre lesdites faces intérieure (FI) et extérieure (FE), ladite face intérieure (FI) comportant suivant une première direction, au moins deux renfoncements internes (RI) successifs constituant chacun un prisme, ayant au moins une zone centrale angulaire définie par une première portion arrondie concave ou convexe (P1), une seconde portion arrondie convexe ou concave (P2), prolongeant ladite première portion arrondie (P1) et propre à transférer vers l'extérieur selon une deuxième direction, via ladite face extérieure (FE), une partie au moins de la lumière qui se propage intérieurement pour assurer une fonction d'éclairage choisie les deux prismes étant reliés entre eux par une portion inclinée (P5) ayant une pente principale déterminée et les rayons de courbure des parties arrondies (P1, P2) étant déterminés en fonction de la viscosité du matériau constitutif de la paroi transparente (PT), **caractérisé en ce que** les renfoncements internes (RI) successifs sont constitués chacun par au moins deux portions de cylindre (P3) voisines suivant une troisième direction perpendiculaire à la première direction, au niveau de la portion inclinée (P5).

2. Dispositif selon la revendication 1, **caractérisé en ce que** ladite seconde portion arrondie convexe (P2) présente un rayon de courbure constant.

3. Dispositif selon la revendication 1 , **caractérisé en ce que** ladite seconde portion arrondie convexe (P2) présente un rayon de courbure qui varie.

4. Dispositif selon l'une des revendications 1 à 3, **caractérisé en ce que** ladite première portion arrondie (P1) présente un rayon de courbure constant.

5. Dispositif selon l'une des revendications 1 à 3, **caractérisé en ce que** ladite première portion arrondie (P1) présente un rayon de courbure qui varie.

6. Dispositif selon l'une des revendications 1 à 5, **caractérisé en ce que** ledit rayon de courbure est compris entre environ 0,1 mm et environ 0,5 mm.

7. Dispositif selon l'une des revendications 1 à 6, **caractérisé en ce que** ladite paroi transparente (PT) est réalisée soit en verre, soit en matériau synthétique.

8. Dispositif selon l'une des revendications 1 à 7, **caractérisé en ce que** ladite paroi transparente (PT) constitue une lunette arrière de véhicule.

9. Dispositif selon la revendication 8, **caractérisé en ce que** ladite fonction d'éclairage choisie est une fonction de signalisation de type feu central de stop.

10. Véhicule, **caractérisé en ce qu'**il comprend au moins un dispositif de protection (D) selon l'une des revendications précédentes.

## Patentansprüche

1. Schutzvorrichtung (D), umfassend eine transparente Wand (PT), ausgestattet mit einer inneren Seite (F) und einer äußeren Seite (FE), und eine Lichtquelle (SL), die geeignet ist, um Licht auf dem Niveau eines Rands (BS) der transparenten Wand (PT) zu liefern, damit es sich in Inneren zwischen der inneren Seite (FI) und der äußeren Seite (FE) ausbreitet, wobei die Innenseite (FI) gemäß einer ersten Richtung mindestens zwei aufeinander folgende interne Verstärkungen (RI) umfasst, die jeweils ein Prisma darstellen, umfassend mindestens einen zentralen Winkelbereich, der von einem ersten konkaven oder konvexen abgerundeten Abschnitt (P1) definiert ist, einen zweiten konvexen oder konkaven abgerundeten Abschnitt (P2), der den ersten abgerundeten Abschnitt (P1) verlängert und geeignet ist, um hin zur Äußeren gemäß einer zweiten Richtung über die Außenseite (FE) mindestens einen Teil des Lichts zu übertragen, der sich innen ausbreitet, um eine gewählte Beleuchtungsfunktion sicherzustellen, wobei die zwei Prismen untereinander durch einen geneigten Abschnitt (P5) verbunden sind, der eine bestimmte Hauptneigung aufweist, und wobei die Krümmungsradien der abgerundeten Teile (P1, P2) je nach der Viskosität des Materials bestimmt sind, aus dem die transparente Seite (PT) hergestellt ist, **dadurch gekennzeichnet, dass** die aufeinander folgenden internen Verstärkungen (RI) jeweils mindestens zwei benachbarte Zylinderabschnitte (P3) gemäß einer dritten Richtung darstellen, die senkrecht zu ersten Richtung ist, auf dem Niveau des geneigten Abschnitts (P5).

2. Vorrichtung nach Anspruch 1, **dadurch gekennzeichnet, dass** der zweite konvexe abgerundete Abschnitt (P2) einen konstanten Krümmungsradius aufweist.

3. Vorrichtung nach Anspruch 1, **dadurch gekennzeichnet, dass** der zweite konvexe abgerundete Abschnitt (P2) einen Krümmungsradius aufweist, der variiert.

4. Vorrichtung nach einem der Ansprüche 1 bis 3, **dadurch gekennzeichnet, dass** der erste abgerundete Abschnitt (P1) einen konstanten Krümmungsradius aufweist.

5. Vorrichtung nach einem der Ansprüche 1 bis 3, **dadurch gekennzeichnet, dass** der erste abgerundete Abschnitt (P1) einen Krümmungsradius aufweist, der variiert.

6. Vorrichtung nach einem der Ansprüche 1 bis 5, **dadurch gekennzeichnet, dass** der Krümmungsradius im Bereich zwischen ungefähr 0,1 mm und ungefähr 0,5 mm liegt.

7. Vorrichtung nach einem der Ansprüche 1 bis 6, **dadurch gekennzeichnet, dass** die transparente Wand (PT) entweder aus Glas oder aus einem synthetischen Material durchgeführt ist.

8. Vorrichtung nach einem der Ansprüche 1 bis 7, **dadurch gekennzeichnet, dass** die transparente Wand (PT) eine hintere Fahrzeugscheibe darstellt.

9. Vorrichtung nach Anspruch 8, **dadurch gekennzeichnet, dass** die ausgewählte Beleuchtungsfunktion eine Signalisierungsfunktion vom Typ zentrales Bremslicht ist.

10. Fahrzeug, **dadurch gekennzeichnet, dass** es mindestens eine Schutzvorrichtung (D) nach einem der vorhergehenden Ansprüche umfasst.

## Claims

1. Protective device (D) comprising a transparent wall (PT) with an inner face (FI) and an outer face (FE), and a light source (SL) for providing light at the edge (BS) of the aforementioned transparent wall (PT) in order that it radiates internally between the aforementioned inner face (FI) and outer face (FE), with the aforementioned inner face (FI) comprising in a first direction, at least two successive internal reinforcements (RI) each constituting a prism, with at least one central angular area defined by a first concave or convex rounded portion (P1), a second concave or convex rounded portion (P2), extending the aforementioned first rounded portion (P1) for transferring to the outside in a second direction, via the aforementioned outer face (FE), at least some of the light radiated internally to perform a selected lighting function with the two prisms being connected to each other by a sloping portion (P5) with a determined main slope and the curvature radii of the rounded parts (P1, P2) being determined on the basis of the viscosity of the material forming the transparent wall (PT), **characterised in that** the successive internal reinforcements (RI) are each formed by at least two adjacent portions of a cylinder (P3) in a third direction perpendicular to the first direction, at the sloping portion (P5).

2. Device according to claim 1, **characterised in that** the aforementioned second convex rounded portion (P2) has a constant curvature radius.

3. Device according to claim 1, **characterised in that** the aforementioned second convex rounded portion (P2) has a curvature radius that varies.

4. Device according to one of the claims 1 to 3, **characterised in that** the aforementioned first rounded portion (P1) has a constant curvature radius.

5. Device according to one of the claims 1 to 3, **characterised in that** the aforementioned first rounded portion (P1) has a curvature radius that varies.

6. Device according to one of the claims 1 to 5, **characterised in that** the aforementioned curvature radius is between approximately 0.1 mm and approximately 0.5 mm.

7. Device according to one of the claims 1 to 6, **characterised in that** the aforementioned transparent wall (PT) is made from either glass or a synthetic material.

8. Device according to one of the claims 1 to 7, **characterised in that** the aforementioned transparent wall (PT) constitutes a rear window of a vehicle.

9. Device according to claim 8, **characterised in that** the aforementioned lighting function is a central brake light type signalling function.

10. Vehicle, **characterised in that** it comprises at least one protective device (D) according to one of the preceding claims.
